# EUROPEAN PATENT APPLICATION

(11) **EP 4 760 432 A1**
(43) Date of publication of application: **17.06.2026**
(21) Application number: 25220238.7
(22) Date of filing: 02.12.2025
(51) Int. Cl.: G05B 23/02

(54) **CONTEXT ADAPTIVE SENSOR SYSTEM**

(30) Priority: 10.12.2024 US 202418975482
(71) Applicant: Analog Devices, Inc., Wilmington, MA 01887 (US)
(72) Inventor: STEIN, Yosef, Wilmington, 01887 (US); CHAVES, Armindo, Wilmington, 01887 (US); MALEPATI, Hazarathaiah, Wilmington, 01887 (US)
(74) Representative: Wallin, Nicholas James

(57) **Abstract**

Aspects of the present disclosure include a detection system, a method, and/or a base node for providing the electrical energy to a plurality of edge nodes, transmitting a sensor interrogation signal to at least one of the plurality of edge nodes in the detection system, receiving, in response to the sensor interrogation signal, sensor information, send the sensor information to a predictor configured to: receive sensor training data, train an artificial intelligence engine using the sensor training data, identify an anomaly and an action associated with the anomaly based on providing the sensor information to the artificial intelligence engine, and provide the action, and performing the action provided by the predictor.

## Description

### PRIORITY CLAIM

This European patent application claims priority from United States Patent Application No 18/975482, filed 10 December 2024.

### BACKGROUND

Sensors are used extensively to monitor the structural integrity of many assets. For example, humidity sensors, chemical sensors, and/or crack sensors may be used to monitor the fuselage and wings of aircrafts for cracks, metal fatigue, corrosions, or other degradations that may potentially damage the integrity of the aircrafts. Proper and timely monitoring and/or management of the degradations may increase operational lifetime of the aircrafts, reduce costs, and/or ensures safety. However, it may be challenging to implement a sensor system that properly monitors vehicles and devices. Therefore, improvements are important.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure include a detection system, a method, and/or a base node for providing the electrical energy to a plurality of edge nodes, transmitting a sensor interrogation signal to at least one of the plurality of edge nodes in the detection system, receiving, in response to the sensor interrogation signal, sensor information, send the sensor information to a predictor configured to: receive sensor training data, train an artificial intelligence engine using the sensor training data, identify an anomaly and an action associated with the anomaly based on providing the sensor information to the artificial intelligence engine, and provide the action, and performing the action provided by the predictor.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic diagram of an example of a context adaptive sensor system according to some aspects of the present disclosure.
FIG. 2 shows example grouping configurations for the context adaptive sensor system of Fig. 1.
FIG. 3 is a schematic diagram of an example of a computer device according to some aspects of the present disclosure.
FIG. 4 is a flowchart of an example of a method for operating a context adaptive sensor system according to some aspects of the present disclosure.
FIG. 5 shows an example of training a neural network 500 for identifying one or more anomalies.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

An aspect of the present disclosure includes a detection system having a base node and a plurality of edge nodes. The base node may be configured to provide electrical energy to the plurality of edge nodes. The base node may be configured to transmit a sensor interrogation signal to a first edge node of the plurality of edge nodes. The first edge node may relay the received sensor interrogation signal to a second edge node of the plurality of edge nodes.

In certain aspects, the plurality of edge nodes may be connected with a plurality of sensors, such as but not limited to, corrosion detection sensors, pressure sensors, humidity sensors, crack detection sensors, strain sensors, stress sensors, temperature sensors, acoustic sensors, fatigue sensors, vibration sensors, erosion sensors, and/or other types of sensors. The plurality of edge nodes may receive sensor information from the corresponding sensors.

In some aspects, the sensor interrogation signal may include selection information indicating which of the plurality of edge nodes, and/or which of the plurality of associated sensors, is to transmit the corresponding sensor information. The plurality of edge nodes may sequentially receive the sensor interrogation signal. In response to the selection information, the selected edge nodes may transmit the corresponding sensor information back to the base node.

According to aspects of the present disclosure, the base node may be configured to implement context adaptive scheme for detection. Specifically, the base node may receive initial sensor information from one or more of the plurality of edge nodes. The initial sensor information may include information relating to humidity, presence of cracks/fissures, temperature, etc. Based on the received initial sensor information, the base node may transmit a number of inquiry signals to a subset of the edge nodes. The inquiry signals may solicit the subset of the plurality of edge nodes to respond with additional sensor information. The base node may request the particular additional sensor information based on the contents of the initial sensor information. The additional sensor information may be used by the base node to determine the presence of defects.

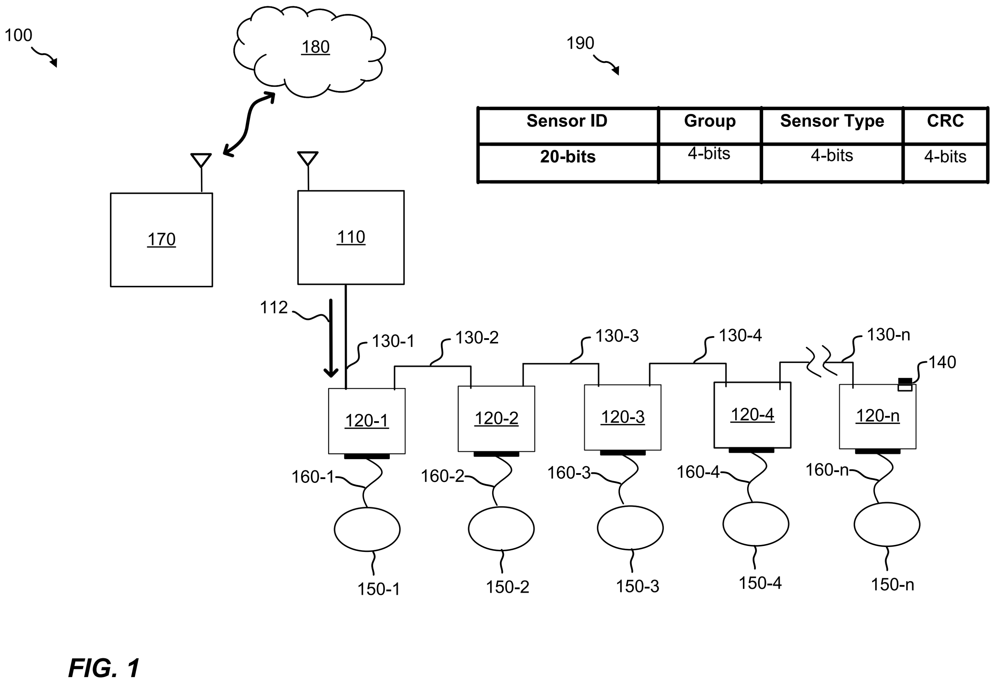

FIG. 1 illustrates an example of a context adaptive detection system 100 according to aspects of the present disclosure. The detection system 100 may be implemented to monitor various assets, such as an aircraft, a wind turbine, a building, and/or an oil platform, etc. In some aspects, the context adaptive detection system 100 may include a base node 110. The context adaptive detection system 100 may include a plurality of edge nodes 120-1, 120-2...120-n, where n is a positive integer. The context adaptive detection system 100 may include a plurality of links 130-1, 130-2... 130-n electrically coupling two or more of the base node 110 and the plurality of edge nodes 120-1, 120-2...120-n. The context adaptive detection system 100 may include a network terminator 140 configured to signal a last "node" of the context adaptive detection system 100. In some aspects, the context adaptive detection system 100 may include a reader 170.

In optional implementations, the context adaptive detection system 100 may include a plurality of sensors 150-1, 15-2... 150-n. The plurality of sensors 150-1, 15-2... 150-n may be coupled to the plurality of edge nodes 120-1, 120-2...120-n. The context adaptive detection system 100 may include a plurality of sensor links 160-1, 160-2... 160-n that couple the plurality of sensors 150-1, 15-2... 150-n to the plurality of edge nodes 120-1, 120-2...120-n.

In one aspect of the present disclosure, the base node 110 may be configured to provide electrical energy to the plurality of edge nodes 120-1, 120-2...120-n, as well as to transmit a sensor interrogation signal 112 to the edge node 120-1. In one aspect, the electrical energy of the sensor interrogation signal 112 may be provided to the plurality of edge nodes 120-1, 120-2...120-n for operation. The sensor interrogation signal 112 may include selection information for selecting at least a subset of the plurality of edge nodes 120-1, 120-2...120-n, and/or a subset of a plurality of sensors 150-1, 150-2... 150-n associated therewith. The at least one subset of the plurality of edge nodes 120-1, 120-2...120-n identified by the sensor interrogation signal 112 may transmit the corresponding sensor information back to the base node 110.

In certain aspects of the present disclosure, each of the plurality of edge nodes 120-1, 120-2...120-n may be configured to receive the sensor interrogation signal 112 from either the base node 110 or a previous edge node. Each of the plurality of edge nodes 120-1, 120-2...120-n may be configured to relay the received sensor interrogation signal 112 to a subsequent edge node or the network terminator 140.

In some aspects, the plurality of edge nodes 120-1, 120-2...120-n may be configured to receive sensor information from a corresponding sensor of the plurality of sensors 150-1, 150-2... 150-n. The sensor information may include, but is not limited to, strain, stress, cracks, fissures, humidity, temperature, vibration, corrosion, and/or other parameters measured by the corresponding sensor of the plurality of sensors 150-1, 150-2... 150-n.

In an aspect of the present disclosure, the sensor information may include a timestamp to synchronize the sensor information collected by the plurality of edge nodes 120-1, 120-2...120-n. Additionally, or alternatively, the sensor information may include location information associated with the plurality of edge nodes 120-1, 120-2...120-n and/or the plurality of sensors 150-1, 150-2... 150-n.

In an alternative aspect of the present disclosure, the base node 110 may append timestamps and/or location information to the sensor information upon receiving the sensor information.

In certain aspects, the sensor interrogation signal 112 may include selection information to select the at least subset of the plurality of edge nodes 120-1, 120-2...120-n and/or the plurality of sensors 150-1, 150-2... 150-n for calibration. The sensor interrogation signal 112 may optionally include calibration parameters used for the calibration process.

In an aspect of the present disclosure, the reader 170 may be configured to transmit the sensor interrogation signal 112, or information carried in the sensor interrogation signal 112, to the base node 110. The reader 170 may be configured to receive the selected sensor information from the base node 110. The reader 170 may be configured as a Health Usage Monitoring System (HUMS). The reader 170 may be configured to upload the selected sensor information received from the corresponding sensor of the plurality of sensors 150-1, 150-2... 150-n via the at least one subset of the plurality of edge nodes 120-1, 120-2...120-n. In alternative implementations, the base node 110 may be configured to upload the selected sensor information received from the corresponding sensor of the plurality of sensors 150-1, 150-2... 150-n via the at least one subset of the plurality of edge nodes 120-1, 120-2...120-n.

In certain aspects of the present disclosure, the reader 170 may generate the selection information by including one or more of the following information associated with the at least one subset of the plurality of edge nodes 120-1, 120-2...120-n: a sensor identifier (ID), a group ID, a sensor type ID, and/or a cyclic redundancy check (CRC). The selection information may identify the at least one subset of the plurality of edge nodes 120-1, 120-2...120-n based on one or more of the above identifiers.

In one aspect of the present disclosure, the sensor ID may be a bit string (e.g., 10 bits, 20 bits, 30 bits, or other number of bits) that uniquely identifies a particular edge node of the plurality of edge nodes 120-1, 120-2...120-n, and/or a particular sensor of the plurality of sensors 150-1, 150-2... 150-n. The group ID may be a bit string (e.g., 2 bits, 4 bits, 6 bits, or other number of bits) that identifies a group of the plurality of edge nodes 120-1, 120-2...120-n, and/or a particular sensor of the sensors 150-1, 150-2... 150-n. In one example, a group ID of 00 may identify the edge nodes 120-2 and 120-4, a group ID of 01 may identify the edge nodes 120-1, 120-2, and 120-3, a group ID of 10 may identify the edge nodes 120-1 and 120-3, and a group ID of 11 may identify the edge node 120-4. In certain aspects of the present disclosure, the group ID may indicate a group of edge nodes associated with general purpose (GP) sensors, a group of edge nodes associated with carbon nanotube (CNT) sensors, and/or a group of edge nodes associated with a combination of GP sensors and CNT sensors. In some aspects of the present disclosure, the group ID may indicate a group of edge nodes associated with a first location (e.g., left wing of an airplane), a group of edge nodes associated with a second location (e.g., right wing of an airplane, etc.

In some aspects, the sensor type ID may indicate the type of sensor selected for the sensor information. For example, the sensor type ID may be a bit string indicating a strain sensor (e.g., sensor type ID 000), a stress sensor (e.g., sensor type ID 001), a cracks sensor (e.g., sensor type ID 010), a fissures sensor (e.g., sensor type ID 011), a humidity sensor (e.g., sensor type ID 100), a temperature sensor (e.g., sensor type ID 101), a vibration sensor (e.g., sensor type ID 110), a corrosion sensor (e.g., sensor type ID 111), and/or other types of sensors. Any of the plurality of edge nodes 120-1, 120-2...120-n being coupled to a sensor identified by the sensor type ID may transmit sensor information back to the base node 110. In certain implementations, the sensor type ID may include reserve values for GP sensor type IDs. The CRC may include redundancy information for checking the integrity of the bit strings associated with the sensor ID, the group ID, and/or the sensor type ID. In one configuration, the CRC may be a 4-bit parity using CRC-4. Other configurations of CRC may be used according to aspects of the present disclosure.

In some aspects, the plurality of sensors 150-1, 150-2... 150-n may have embedded power supplies (not shown) configured to supply electrical energy to the plurality of sensors 150-1, 150-2... 150-n. In other aspects, the plurality of sensors 150-1, 150-2... 150-n may not include any embedded power supplies. As such, the plurality of edge nodes 120-1, 120-2...120-n may provide electrical energy to the plurality of sensors 150-1, 150-2... 150-n using electrical energy obtained from the base node 110.

An aspect of the present disclosure may include a data structure 190 associated with a sensor of the plurality of sensors 150-1, 150-2... 150-n. The data structure 190 may include a configurable number of fields, each having a configurable length. In one example, which should not be construed as limiting, the data structure 190 may include a sensor ID field (20 bits), a group ID field (4 bits), a sensor type ID field (4 bits), and a CRC field (4 bits). In other implementations, the data structure 190 may have different fields and/or different number of bits in each field according to aspects of the present disclosure.

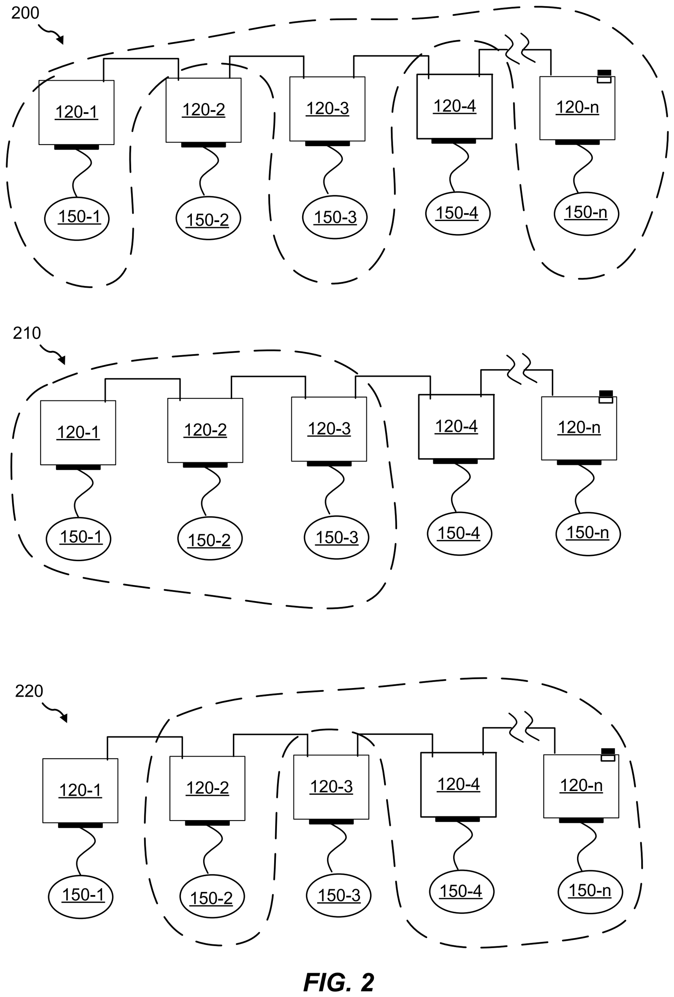

FIG. 2 illustrates examples of operations of the context adaptive sensor network according to aspects of the present disclosure. Referring to FIGs. 1 and 2, during normal operation of the context adaptive detection system 100, the base node 110 may transmit an initial sensor interrogation signal to the plurality of edge nodes 120-1, 120-2...120-n. One or more edge nodes indicated in the initial sensor interrogation signal may respond with initial sensor information. The base node 110 may receive the initial sensor information. The base node 110 and/or the reader 170 may analyze the initial sensor information as described below. Based on the initial sensor information, the base node 110 and/or the reader 170 may identify additional sensor information necessary to perform a follow up analysis.

In certain aspects, the base node 110 and/or the reader 170 may identify one or more types of information (e.g., temperature, strain, humidity, or other information described above) to include in the additional sensor information. The base node 110 and/or the reader 170 may identify and/or which of the plurality of edge nodes 120-1, 120-2...120-n to transmit the additional sensor information. The base node 110 and/or the reader 170 may identify a frequency to report the additional sensor information (e.g., every minute, every hour, etc.). The base node 110 and/or the reader 170 may identify one or more edge nodes associated with a location (e.g., edge nodes at the top of the left wing of an aircraft) to report transmit the additional sensor information. The base node 110 and/or the reader 170 may identify any one of or any combinations described above to transmit the additional sensor information.

In some aspects, after identifying the additional sensor information, the base node 110 may transmit an additional sensor interrogation signal to the plurality of edge nodes 120-1, 120-2...120-n. The base node 110 may transmit the additional sensor interrogation signal to solicit the additional sensor information from one or more of the plurality of edge nodes 120-1, 120-2...120-n.

In certain aspects of the present disclosure, one or more of the plurality of edge nodes 120-1, 120-2...120-n (as indicated in the additional sensor interrogation signal) may respond with the additional sensor information requested by the base node 110 via the additional sensor interrogation signal. The base node 110 and/or the reader 170 may receive the additional sensor information for analysis.

In some aspects of the present disclosure, the base node 110 may transmit a calibration signal to the plurality of edge nodes 120-1, 120-2...120-n. The calibration signal may indicate a subset of the plurality of edge nodes 120-1, 120-2...120-n to perform the calibration process. The calibration signal may include information and/or instructions used for the calibration process.

In a first example of operation 200, the context adaptive detection system 100 may include twenty (20) edge nodes (i.e., n = 20). The base node 110 may transmit an initial sensor interrogating signal to the 20 edge nodes. The initial sensor interrogation signal may include selection information. Further, the base node 110 may provide electrical energy to the plurality of edge nodes 120-1, 120-2...120-n. The edge node 120-2 may receive the initial sensor interrogation signal (via the edge node 120-1) and determine that the selection information indicates the edge node 120-2 to respond. The edge node 120-2 may interrogate the sensor 150-2 (e.g., a strain sensor) for any detected strain measurement value. The edge node 120-2 may receive information associated with the strain detected by the sensor 150-2, and transmit the received information back to the base node 110 as the initial sensor information.

In some aspects of the present disclosure, the edge node 120-2 may relay at least a portion of the initial sensor interrogation signal to the remaining edge nodes of the plurality of edge nodes 120-1, 120-2...120-n. The edge node 120-20 may eventually receive the at least a portion of the initial sensor interrogation signal, and relay at least a portion of the initial sensor interrogation signal to the network terminator 140. In one aspect, the network terminator 140 may transmit an end of network indication back to the base node 110.

In certain aspects of the present disclosure, the base node 110 and/or the reader 170 may receive the initial sensor information from the edge node 120-2. The base node 110 and/or the reader 170 may analyze the initial sensor information. In response to the analysis of the initial sensor information, the base node 110 and/or the reader 170 may identify the additional sensor information. Specifically, the base node 110 and/or the reader 170 may identify edge nodes with strain sensors to provide the additional sensor information. In the current example, the base node 110 and/or the reader 170 may identify the edge nodes 120-1, 120-3, and 120-20 as the edge nodes to provide the additional sensor information (from their respective strain sensors 150-1, 150-3, and 150-20).

In some aspects, the edge nodes 120-1, 120-3, and 120-20 may interrogate the corresponding sensors 150-1, 150-3, and 150-20. The edge nodes 120-1, 120-3, and 120-20 may provide the received sensor information as the additional sensor information for the base node 110 and/or the reader 170 to analyze.

In a second example of operation 210, the context adaptive detection system 100 may include ten (10) edge nodes (i.e., n = 10) where the sensors 150-1, 150-2, and 150-3, are CNT sensors, and the sensors 150-4, 150-5, 150-6, 150-7, 150-8, 150-9, and 150-10 are GP sensors. In response to receiving the selection information, calibration information, and/or the electrical energy from the reader 170, the base node 110 may transmit a calibration signal including the selection information to the edge node 120-1. The calibration signal may be configured to instruct the edge nodes with CNT sensors to perform the calibration process. The edge node 120-1 (coupled to a CNT sensor) may receive the calibration signal and determine that the selection information indicates the selection of CNT sensors (group ID: 00). In response, the edge node 120-1 may perform the calibration process on the sensor 150-1 (e.g., a strain sensor, a corrosion sensor, a crack sensor...). In some aspects, the edge node 120-1 may perform the calibration process with information in the calibration signal. The edge node 120-1 may relay at least a portion of the calibration signal to the edge node 120-2, and so forth and so on.

In certain aspects of the present disclosure, the edge nodes 120-2, 120-3 may receive the at least a portion of the calibration signal relayed by the edge node 120-1 and perform the calibration process as described above. In some instances, the edge nodes 120-4, 120-5... 120-10 may refrain from performing calibration signal because these edge nodes are not in the calibration group.

In a third example of operation 220, the context adaptive detection system 100 may include five (5) edge nodes (i.e., n = 5). The base node 110 may transmit the initial sensor interrogation signal including the selection information to the edge node 120-1. The selection information may indicate the edge 120-3 to transmit the corresponding initial sensor information. The edge node 120-1 may receive the initial sensor interrogation signal. The edge node 120-1 may relay at least a portion of the initial sensor interrogation signal to the next edge node (i.e., the edge node 120-2), until the at least a portion of the initial sensor interrogation signal is sequentially relayed to the edge node 120-3. The edge nodes 120-1 and 120-2 may refrain from performing operations. The edge node 120-3 may transmit the initial sensor information back to the base node 110 and/or the reader 170.

In certain aspects of the present disclosure, the base node 110 and/or the reader 170 may analyze the initial sensor information. The base node 110 and/or the reader 170 may determine that, based on the initial sensor information, there is a potential defect associated the edge node 120-3. In response, the base node 110 and/or the reader 170 may identify the edge nodes in the same location as the edge node 120-3, namely the edge nodes 120-2, 120-4, and 120-5, to respond with the additional sensor information. Consequently, the base node 110 and/or the reader 170 may transmit the additional sensor interrogation signal to the edge nodes 120-2, 120-4, and 120-5 to respond with the additional sensor information.

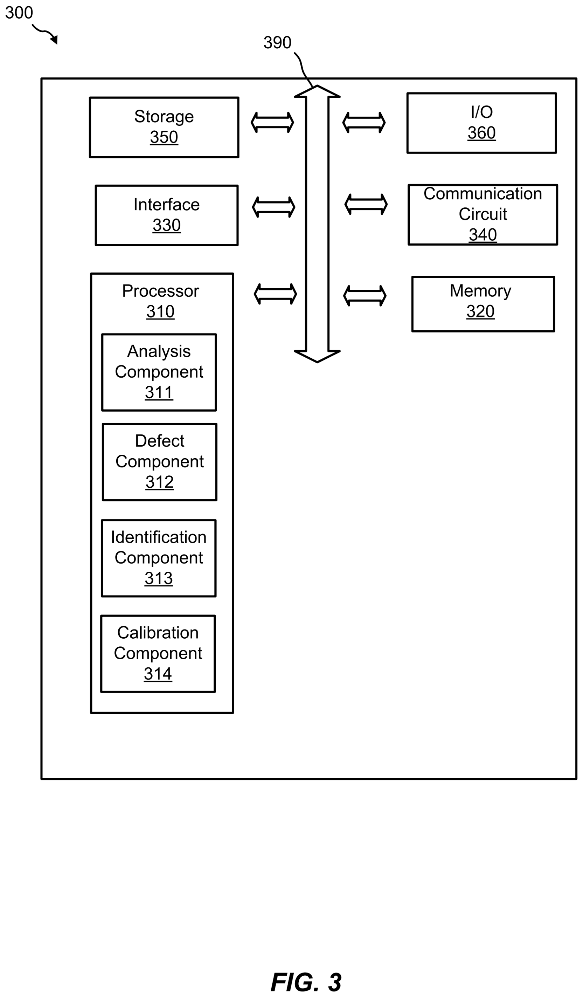

FIG. 3 illustrates an example of a computer device 300 that may implement one or more components of the context adaptive detection system 100 (FIG. 1). For instance, the computer device 300 may be configured to include some or all of the functions of the base node 110 and/or the reader 170. The computer device 300 may be in a single package or as a chip set assembly with multiple components. The computer device 300 may include a processor 310 configured to execute instructions stored in a memory 320. The processor 310 may include an analysis component 311 configured to analyze sensor information. The processor 310 may include a defect component 312 configured to detect defects or potential defects based on the analysis by the analysis component 311. The processor 310 may include an identification component 313 configured to identify additional sensor information needed in response to detecting potential defects. The processor 310 may include a calibration component 314 configured to provide calibration parameters and procedures.

In some aspects, the memory 320 may include computer executable instructions. The computer device 300 may include an interface circuit 330 configured to provide a hardware interface with external devices. The computer device 300 may include a communication circuit 340 configured to communicate via wired or wireless communication channels. The computer device 300 may include a storage 350 configured to store digital information. The computer device 300 may include an input/output (I/O) interface device 360 configured to receive input signals and/or transmit output signals. One or more of the processor 310, the memory, the interface circuit 330, the communication circuit 340, the storage 350, and/or the 10 device 360 may be communicatively coupled via a bus 390.

Aspects of the present disclosure include methods for detecting, isolating, and diagnosing faults (e.g., anomalies associated with stress, strain, fissures, corrosions, etc.) using an adaptive machine fault detection model. Faults may also be referred to as defects. In some aspects, an exemplary system includes at least one sensor node (such as one or more of the edge nodes 120 and/or the sensors 150) to sense a signal indicative of an operation status of a vehicle and/or a device, and a processor configured generate a computational machine fault model that comprises an autoencoder (AE) network and an associative module. The AE network may encode the sensed signal into signal features in a latent feature space, and decodes the signal features to produce a reconstructed signal. The associative module may transform the encoded signal features into an associative output using a dynamically updatable codebook. The processor (and/or a component of the processor) may detect a presence or absence of fault in the machine part based on reconstruction losses determined respectively from the reconstructed signal and the associative output.

In one aspect, a scheme for detecting machine fault may include detecting based on a first reconstructed signal produced by the AE network, a second reconstructed signal (associative output) produced by the associative module, and/or dual thresholds associated respective reconstruction signals. First, a sensor signal may be preprocessed, and provided into the AE network to produce a first reconstructed signal. A reconstruction loss (e.g., a mean squared error) may be determined between the input sensor signal and the first reconstructed signal.

Next, the first reconstruction loss may be compared to a first reconstruction loss threshold. If the first reconstruction loss is less than the first reconstruction loss threshold, then an absence of fault is determined. If the first reconstruction loss is greater than or equal to the first reconstruction loss threshold, then the encoded signal features produced by the AE network may be provided to the associative module.

Next, the availability of the associative module is checked, and entries (i.e., prestored latent representations) of a dictionary (which may be stored in the memory 320) may be searched for an entry that matches the encoded signal features, such as according to a nearest neighbor criterion based on a distance metric. If the associative module is populated and has at least one entry, then the stored reconstruction value corresponding to the nearest latent representation may be assigned to be the second reconstructed signal for the encoded signal features.

Next, the second reconstructed signal may be compared to the second reconstruction loss threshold. If the second reconstruction loss is less than the second reconstruction loss threshold, then an absence of fault is determined. If the second reconstruction loss is greater than or equal to the second reconstruction loss threshold, then a fault is determined to be present.

Aspects of the present disclosure may include analyzing sensor information to detect faults and/or defects using machine learning and/or an artificial intelligence system.

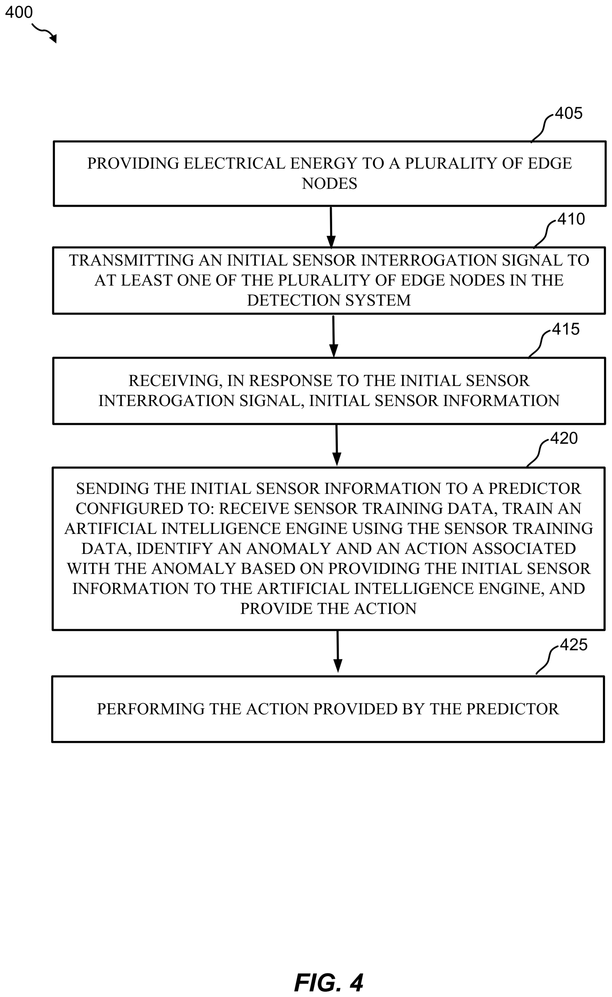

FIG. 4 illustrates a method 400 for operating a detection system. The method 400 may be performed by one or more of the computer device 300, one or more subcomponents of the computer device 300, the base node 110, the reader 170, and/or the plurality of edge nodes 120-1, 120-2... 120-n.

At 405, the method 400 may provide electrical energy to a plurality of edge nodes. For example, the base node 110 may be configured to, and/or provide the means for, providing electrical energy to a plurality of edge nodes as described above.

At 410, the method 400 may transmit an initial sensor interrogation signal to at least one of the plurality of edge nodes in the detection system. For example, the base node 110 may be configured to, and/or provide the means for, transmitting an initial sensor interrogation signal to at least one of the plurality of edge nodes in the detection system as described above.

At 415, the method 400 may receive, in response to the initial sensor interrogation signal, initial sensor information. For example, the base node 110 may be configured to, and/or provide the means for, receiving, in response to the initial sensor interrogation signal, initial sensor information as described above.

At 420, the method 400 may send the initial sensor information to a predictor configured to: receive sensor training data, train an artificial intelligence engine using the sensor training data, identify an anomaly and an action associated with the anomaly based on providing the initial sensor information to the artificial intelligence engine, and provide the action. For example, the base node 110 may be configured to, and/or provide the means for, sending the initial sensor information to a predictor configured to: receive sensor training data, train an artificial intelligence engine using the sensor training data, identify an anomaly and an action associated with the anomaly based on providing the initial sensor information to the artificial intelligence engine, and provide the action as described above.

In certain aspects, the predictor may be implemented using the autoencoder described above. In one aspect of the present disclosure, the predictor may be implemented as an artificial intelligence engine implementing machine learning. The machine learning may be implemented as a neural network (e.g., a convolutional neural network) that demonstrate learning behavior by performing analysis/tasks without being explicitly programmed. In a certain aspect of the present disclosure, a convolutional neural network may be implemented to perform fault detection. A convolutional neural network may detect fault by using multiple layers of choices based on output of a previous layer, creating increasingly smarter and more abstract conclusions. Specifically, the convolutional neural network may identify the anomaly and the action based on one or more of an asset type of the asset, a weight file, a configuration file, or a convolutional neural network layer associated with the asset type.

At 425, the method 400 may perform the action provided by the predictor. For example, the base node 110 may be configured to, and/or provide the means for, performing the action provided by the predictor as described above.

Aspects of the present disclosure include a method including providing electrical energy to a plurality of edge nodes, transmitting an initial sensor interrogation signal to at least one of the plurality of edge nodes in the detection system, receiving, in response to the initial sensor interrogation signal, initial sensor information, analyzing the initial sensor information, identifying, based on analyzing the initial sensor information, a subset of the plurality of edge nodes for providing additional sensor information, transmitting an additional sensor interrogation signal to the subset of the plurality of edge nodes, and receiving, in response to the additional sensor interrogation signal, the additional sensor information from the subset of the plurality of edge nodes.

Aspects of the present disclosure include a detection system including a plurality of edge nodes sequentially coupled and each configured to receive one or more of a portion of electrical energy, an initial sensor interrogation signal, and an additional sensor interrogation signal provided by a base node, and transmit to the base node, in response to one or more of the initial sensor interrogation signal or the additional sensor interrogation signal, one or more of initial sensor information or additional sensor information, a base node configured to provide the electrical energy to the plurality of edge nodes, transmit the initial sensor interrogation signal to at least one of the plurality of edge nodes in the detection system, receive, in response to the initial sensor interrogation signal, the initial sensor information, analyze the initial sensor information, identifying, based on analyzing the initial sensor information, a subset of the plurality of edge nodes for providing the additional sensor information, transmit the additional sensor interrogation signal to the subset of the plurality of edge nodes, and receive, in response to the additional sensor interrogation signal, the additional sensor information from the subset of the plurality of edge nodes.

Aspects of the present disclosure include the detection system above, further comprising a plurality of sensors, wherein at least one sensor of the plurality of sensors is associated with each edge node.

Aspects of the present disclosure include any of the detection systems above, wherein the plurality of sensors include one or more of a corrosion detection sensor, a pressure sensor, a humidity sensor, a crack detection sensor, a strain sensor, a stress sensor, a temperature sensor, an acoustic sensor, a fatigue sensor, a vibration sensor, or an erosion sensor.

Aspects of the present disclosure include any of the detection systems above, wherein the plurality of sensors include an unpowered sensor and a powered sensor.

Aspects of the present disclosure include any of the detection systems above, wherein the base node is further configured to identify the subset of the plurality of edge nodes based on at least one of a location of the subset, one or more sensor types associated with the subset, or one or more sensor identifiers associated with the subset.

Aspects of the present disclosure include any of the detection systems above, wherein the base node is further configured to transmit a calibration signal configured to calibrate a second subset of the plurality of edge nodes.

Aspects of the present disclosure include any of the detection systems above, further comprising a reader or a Health Usage Monitoring System (HUMS) having a reader power source configured to provide the electrical energy to the base node and a data link configured to receive, from the base node, the initial sensor information or the additional sensor information.

Aspects of the present disclosure include any of the detection systems above, wherein the base node is further configured to analyze the initial sensor information using machine learning.

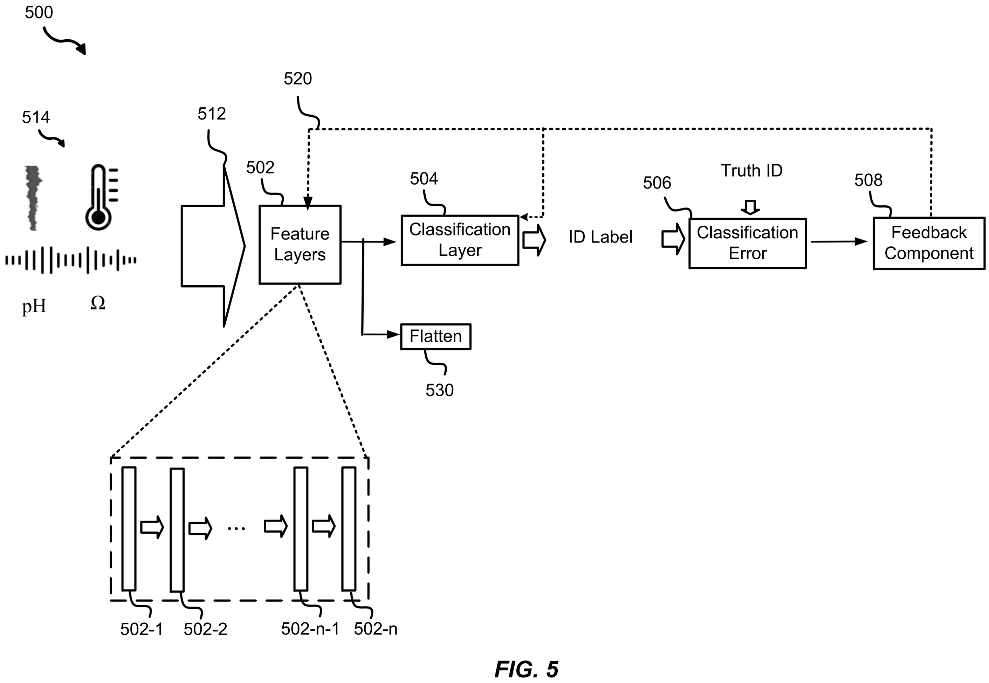

Turning to FIG. 5, an example of training a neural network 500 for identifying one or more anomalies may include feature layers 502 that receive training information 512 associated with sensor measurements 514. The training information 512 may include images of the sensor measurements 514 from various sensors such as vibration, humidity, sounds, chemical composition, temperature, corrosion, cracks, fissures, stress, strain, etc. The feature layers 502 may include a deep learning algorithm that includes feature layers 502-1, 502-2..., 502-n-1, 502-n. Each of the feature layers 502-1, 502-2..., 502-n-1, 502-n may perform a different function and/or algorithm (e.g., pattern detection, transformation, feature extraction, etc.). In a non-limiting example, the feature layer 502-1 may identify types of vibration in the training information 512, the feature layer 502-2 may measure an amount of strain in the training information 512, the feature layer 502-n-1 may perform a non-linear transformation, and the feature layer 502-n may perform a convolution. In another example, the feature layer 502-1 may measure the temperature in the training information 512, the feature layer 502-2 may perform a Fourier Transform to the training information 512, the feature layer 502-n-1 may perform an integration, and the feature layer 502-n may identify cracks/fissures. Other implementations of the feature layers 502 may also be used to extract features of the training information 512.

In certain implementations, the output of the feature layers 502 may be provided as input to a classification layer 504. The classification layer 504 may be configured to identify the features (e.g., metal fatigue, presence of cracks, corrosion, etc.) based on the output.

In some implementations, the classification layers 504 may output the ID label. A classification error component 506 may receive the ID label and a ground truth ID as input. The ground truth ID may be the "correct answer" provided by a trainer (not shown) to the neural network 500 during training. For example, the neural network 500 may compare the ID label to the ground truth ID to determine whether the classification layer 504 properly identifies the sensor measurements 514 associated with the ID label.

**In** some instances, the neural network 500 may include a feedback component 508. Based on the ID label and the ground truth ID, the classification error component 506 may output an error into the feedback component 508. The feedback component 508 may receive the error and provide one or more updated parameters 520 to the feature layers 502 and/or the classification layer 504. The one or more updated parameters 520 may include modifications to parameters and/or equations to reduce the error.

**In** some examples, the neural network 500 may include a flatten function 530 that generates a final output of the feature extraction step. For example, the flatten function 530 may be an operator that transforms a matrix of features into a vector. The output of the neural network 500 may include a vector describing the features/objects/environment.

In some aspects, the neural network 500 may be adapted to identify anomalies according to aspects of the present disclosure.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. For example, changes may be made in the function and arrangement of elements discussed without departing from the scope of the disclosure. Also, various examples may omit, substitute, or add various procedures or components as appropriate. For instance, the methods described may be performed in an order different from that described, and various steps may be added, omitted, or combined. Also, features described with respect to some examples may be combined in other examples. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

Further, for example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a non-transitory computer-readable medium. Computer-readable media includes computer storage media. Storage media may be any available media that may be accessed by a computer. By way of example, and not limitation, such computer-readable media may comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by a computer. Further, features implementing functions may also be physically located at various positions, including being distributed such that portions of functions are implemented at different physical locations.

Also, the various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

The previous description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A detection system for monitoring an asset, comprising:
a plurality of edge nodes sequentially coupled and each configured to:
receive one or more of a portion of electrical energy and a sensor interrogation signal provided by a base node; and
transmit to the base node, in response to the sensor interrogation signal, sensor information; and
a base node configured to:
provide the electrical energy to the plurality of edge nodes,
transmit the sensor interrogation signal to at least one of the plurality of edge nodes in the detection system;
receive, in response to the sensor interrogation signal, the sensor information;
send the sensor information to a predictor configure to:
receive sensor training data;
train an artificial intelligence engine using the sensor training data;
identify an anomaly and an action associated with the anomaly based the sensor information provided to the artificial intelligence engine; and
provide the action; and
perform the action provided by the predictor.

2. The detection system of claim 1, wherein to perform the action:
the base node is further configured to:
transmit an additional sensor interrogation signal to a subset of the plurality of edge nodes; and
the subset of the plurality of edge nodes are configured to:
receive the additional sensor interrogation signal; and
transmit, in response to receiving the additional sensor interrogation signal, additional sensor information to the base node.

3. The detection system of claim 2, wherein the base node is further configured to identify the subset of the plurality of edge nodes based on a sensor type, or a sensor ID, or a sensor group.

4. The detection system of any of claims 1 to 3, wherein the base node is further configured to transmit a calibration signal configured to calibrate a subset of the plurality of edge nodes.

5. The detection system of any of claims 1 to 4, further comprising a reader or a Health Usage Monitoring System (HUMS) comprising:
a reader power source configured to provide the electrical energy to the base node, and
a data link configured to receive, from the base node, the sensor information.

6. A method for operating a detection system for monitoring an asset, comprising:
providing the electrical energy to a plurality of edge nodes,
transmitting a sensor interrogation signal to at least one of the plurality of edge nodes in the detection system;
receiving, in response to the sensor interrogation signal, sensor information;
send the sensor information to a predictor configured to:
receive sensor training data;
train an artificial intelligence engine using the sensor training data;
identify an anomaly and an action associated with the anomaly based on the sensor information provided to the artificial intelligence engine; and
provide the action; and
performing the action provided by the predictor.

7. The system of any of claims 1 to 5 or the method of claim 6, wherein the predictor is a neural network.

8. The method of claim 7, further comprising:
transmitting an additional sensor interrogation signal to a subset of the plurality of edge nodes; and
receiving, in response to transmitting the additional sensor interrogation signal, additional sensor information from the subset of the plurality of edge nodes.

9. The method of claim 8, further comprising identifying the subset of the plurality of edge nodes based on a sensor type, a sensor ID or a sensor group.

10. The system of any of claims 1 to 5, or the method of any of claims 6 to 9, wherein the predictor is further configured to identify the anomaly and the action based on one or more of an asset type, a predictor weight file, a predictor configuration file, or a predictor convolutional neural network layer associated with the asset type.

11. The system of any of claims 1 to 5 or the method of any of claims 6 to 10, wherein the asset includes one of an aircraft, a wind turbine, a building, or an oil platform.

12. The system of any of claims 1 to 5 or the method of any of claims 6 to 11, further comprising a plurality of sensors, wherein at least one sensor of the plurality of sensors is associated with each edge node.

13. The system or method of claim 12, wherein the plurality of sensors includes one or more of a corrosion detection sensor, a pressure sensor, a humidity sensor, a crack detection sensor, a strain sensor, a stress sensor, a temperature sensor, an acoustic sensor, a fatigue sensor, a vibration sensor, or an erosion sensor.

14. The method of any of claims 6 to 13, further comprising transmitting a calibration signal configured to calibrate a subset of the plurality of edge nodes.

15. The method of claim 14, further comprising transmitting calibration information to the subset of the plurality of edge nodes for calibration.
